# EUROPEAN PATENT APPLICATION

(11) **EP 1 418 774 A1**
(43) Date of publication of application: **12.05.2004**
(21) Application number: 02257635.9
(22) Date of filing: 05.11.2002
(51) Int. Cl.: H04Q 7/34

(54) **A network for mobile telecommunications, and communicating data from a base station to a base station controller**

(71) Applicant: LUCENT TECHNOLOGIES INC., Murray Hill, New Jersey 07974-0636 (US)
(72) Inventor: Cao, Qiang, Swindon, Wiltshire SN2 3XL (GB); Charriere, Patrick, Tetbury, Gloucestershire GL8 8DR (GB); Lim, Seau Sian, Swindon, Wiltshire SN2 1HF (GB); Sapiano, Philip, Corsham, Wiltshire SN13 9AY (GB)
(74) Representative: Sarup, David Alexander

(57) **Abstract**

A method is provided of communicating data over an interface from a base station of a network for mobile telecommunications to a base station controller. The base station controller is operative to control the base station. The method comprises storing user data and diagnostic data for transmission, selecting user data for transmission in preference to diagnostic data, and selecting diagnostic data traffic for transmission when no user traffic data is stored for transmission.

## Description

### Technical Field

The present invention relates to a method of communicating data over an interface from a base station of a network for mobile telecommunications to a base station controller operative to control the base station.

The present invention also relates to a network for mobile telecommunications comprising a base station connected via an interface with a base station controller operative to control the base station.

### Background of the Invention

One of the key factors in successful deployment of a network for mobile telecommunications is the ability to observe diagnostic information in order to determine system problems.

Networks in accordance with wideband-code division multiple access (W-CDMA) standards, such as the Universal Mobile Telecommunications System (UMTS) standard, allow a limited amount of diagnostic information to be passed along signalling channels between a radio network controller (RNC) and base station (Node-B in UMTS terminology) over an interface (IuB interface in UMTS terminology). The information passed between them is restricted to a limited number of messages.

The problems that existing UMTS networks have in handling diagnostic information from remote locations are that the available bandwidth is limited to cover the normal signalling scenarios, and communications over the IuB interface are limited to the commands defined within the standard. Due to the above limitations, much of the diagnostic information is instead usually retrieved by an operations, administration and maintenance (OA&M) engineer making a visit directly to a site to connect a computer directly into the base station (Node-B) situated there in order to obtain the diagnostic information.

As is well known (and described in Third Generation Partnership Project Technical Specification 25.430 Section 7), UMTS networks make use of layered protocols, whereby transport channels are mapped onto and so transmitted using physical channels.

### Summary of the Invention

The present invention provides a method of communicating data over an interface from a base station of a network for mobile telecommunications to a base station controller operative to control the base station, comprising storing user data and diagnostic data for transmission, selecting user data for transmission in preference to diagnostic data, and selecting diagnostic data traffic for transmission when no user traffic data is stored for transmission.

Preferably the network is a Universal Mobile Telecommunications System (UMTS) network, the controller is a radio network controller (RNC), and the interface is an IuB interface.

Preferably the diagnostic data is provided to a local maintenance terminal connected to the controller for inspection.

Preferably there are a plurality of data communication channels between the base station and the controller over the interface, one channel being a diagnostic data channel, and another channel being a user data channel, the base station includes a plurality of data buffers such that data of each channel for transmission is stored before transmission in a respective buffer, the buffers each including an occupancy indicator so that user data is selected for transmission in preference to data from the buffer for diagnostic data.

Preferably the controller includes a plurality of further data buffers, such that control data of each channel for transmission to the base station is stored before transmission in a respective buffer, the further buffers each including an occupancy indicator so that user channel control data is selected for transmission in preference to diagnostic channel control data.

Preferably the diagnostic data channel is set up in response to a request from the controller to the base station, and control data which is a request for diagnostic data is sent by the controller to the base station, diagnostic data being sent in response.

Preferably updated diagnostic data is sent periodically until control data which is a command to stop sending diagnostic data is received by the base station.

Preferably the base station controller is at a distance away from the base station, and may be distant from the base station.

The present invention also provides a network for mobile telecommunications comprising a base station connected via an interface with a base station controller operative to control the base station. the base station comprising storing means operative to store user data and diagnostic data for transmission, selecting means operative to select user data for transmission in preference to diagnostic data and to select diagnostic data traffic for transmission when no user traffic data is stored for transmission.

Preferably the network is a Universal Mobile Telecommunications System (UMTS) network, the controller is a radio network controller (RNC), and the interface is an IuB interface.

Preferably the network further comprises a local maintenance terminal connected to the controller for inspection of the diagnostic data.

Preferably in use there are a plurality of data communication channels between the base station and the controller over the interface, one channel being a diagnostic data channel, and another channel being a user data channel, the base station includes a plurality of data buffers such that data of each channel for transmission is stored before transmission in a respective buffer, the buffers each including an occupancy indicator so that user data is selected for transmission in preference to data from the buffer for diagnostic data.

Preferably the controller includes a plurality of further data buffers, such that control data of each channel for transmission to the base station is stored before transmission in a respective buffer, the further buffers each including an occupancy indicator so that user channel control data is selected for transmission in preference to diagnostic channel control data.

Preferably in use the diagnostic data channel is set up in response to a request from the controller to the base station, and control data which is a request for diagnostic data is sent by the controller to the base station, diagnostic data being sent in response.

Preferably the base station is operative to send updated diagnostic data periodically until control data which is a command to stop sending diagnostic data values is received by the base station.

Preferably the base station controller is at a distance away from the base station, and may be distant from the base station.

Preferred embodiments of the present invention provide a method for remote capture of diagnostic information from a wireless base station. Preferred embodiments enable the sending of diagnostic information from a remote base station to the radio network controller (RNC) ,e.g. for observation, at a high rate, e.g. in real time, whilst using the existing infra-structure and not impacting user traffic services. This enables field faults and problems to be resolved rapidly, improving the reliability of the network

The technique in preferred embodiments allows passing of diagnostic information back from a base station to the radio network controller (RNC), and optionally then on to an operations and maintenance centre (OMC). The technique is applicable in wideband code division multiple access (W-CDMA) networks, such as Universal Mobile Telecommunications System (UMTS) networks.

### Brief Description of the Drawings

A preferred embodiment of the present invention will now be described by way of example and with reference to the drawings, in which:
Figure 1 is a diagram illustrating a UMTS network (UTRAN), and
Figure 2 is a diagram illustrating the messaging sequence between a base station and its controlling radio network controller (RNC).

### Detailed Description

One type of wideband code division multiple access (W-CDMA) network is a Universal Mobile Telecommunications System (UMTS) terrestrial radio access network (UTRAN).

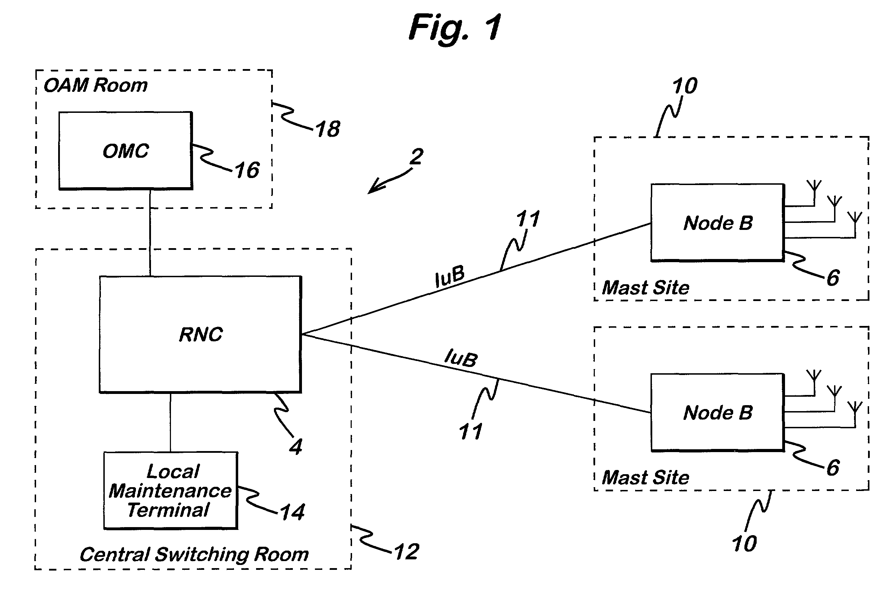

The architecture of a Universal Mobile Telecommunications System (UMTS) terrestrial radio access network (UTRAN) 2 is basically as shown in Figure 1. In the Figure only one radio network controller 4 and two base stations 6 are shown for simplicity. Each base station (Node-B in UMTS terminology) 6 of the network 2 typically has three radio coverage areas (i.e. cells, also known as sectors) as the base station has three directional antennas 8 angled at 120 degrees to each other. Radio network controllers (RNC) 4 each control several base stations 6 and hence a number of cells.

As shown in Figure 1, each base station is at a respective mast site 10. The radio network controller (RNC) controlling a base station is typically several miles from that base station. The radio network controller (RNC) is located in a central switching room 12. The radio network controller (RNC) includes a local maintenance terminal 14 whereby an engineer can gain access.

The radio network controller (RNC) is connected to an operations and maintenance centre (OMC) 16 located in an operations, administration and maintenance (OAM) room 18.

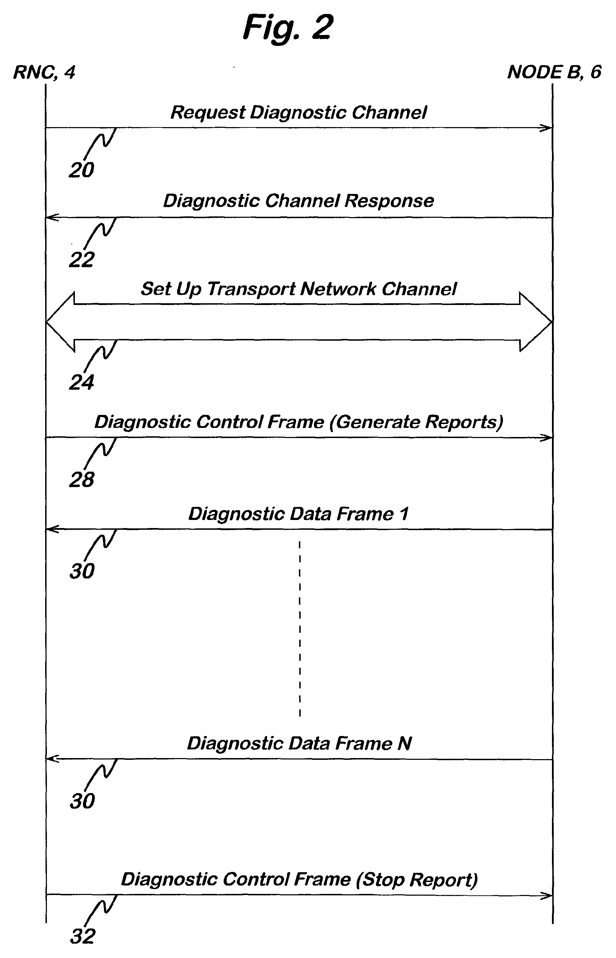

As shown in Figure 2, a command 20 is sent over the signalling channel (known as the Node-B Application Part (NBAP) channel in UMTS terminology) from the radio network controller (RNC) 4 to the base station 6 requesting a channel for diagnostic information. This command 20 includes, for example, an indication of maximum bandwidth and the priority that the diagnostic channel is given.

The base station 6 responds with a response 22 granting or denying the request.

If the request is granted, the base station 6 passes back identification and addressing information, namely transport layer information, in order to set up a connection. The radio network controller (RNC) then sets up a network transport channel 24 (e.g. asynchronous transfer mode (ATM) in the case of a UMTS network). This network transport channel 24 carries diagnostic traffic and shares the bandwidth available with other transport channels namely user traffic channels (e.g. voice channels). The network transport channel 24 (also known as the diagnostic traffic channel) is set up so that the user traffic channels always take higher priority in terms of being allocated transmission resources than the diagnostic traffic channel. In the base stations 6 and radio network controller (RNC) 4, there are buffers (not shown) for data to be sent on each channel, including buffers for each of the diagnostic traffic and user traffic channels, those buffers having occupancy level indicators such that any non-zero user data level causes user data to be selected for transmission before any remaining transmission resource (i.e bandwidth) is allocated to lower priority data, such as diagnostic data awaiting transmission.

Frames are used to communicate the diagnostic information between the base station and radio network controller (RNC). Some of the frames 28 are for control signalling and others 30 of the frames are for data. The control frames 28 are used by the radio network controller (RNC) to configure the base station to send appropriate measurement reports in the form of data frames 30, i.e to instruct the base station 6 to generate reports. Data frames 30 are used to send the measurements back from the base station 6 to radio network controller (RNC) 4. Examples of data which is passed to the radio network controller (RNC) include uplink interference levels for every frame, instantaneous power levels of each radio link, and status of software processes. In some embodiments, the measurements are at least partially standardised, that is defined in a telecommunications standard.

The radio network controller (RNC) 4 stores received diagnostic data from the base station 6.

At the end of the procedure, a command 32 is sent from the radio network controller (RNC) 4 to the base station 6 which instructs the base station 6 to stop generating reports (i.e,. frames 30) of diagnostic data.

The request 20 for a diagnostic channel by the radio network controller (RNC) 4 can be triggered (by an engineer) using the local maintenance terminal 14 connected to the radio network controller (RNC) 4. The diagnostic data is sent back to the local maintenance terminal 14 for inspection by the engineer.

In another embodiment (not shown) the local maintenance terminal can be part of the operations and maintenance centre (OMC), for example connected to the operations and maintenance centre (OMC) rather than directly to the radio network controller (RNC).

## Claims

1. A method of communicating data over an interface from a base station of a network for mobile telecommunications to a base station controller operative to control the base station, comprising storing user data and diagnostic data for transmission, selecting user data for transmission in preference to diagnostic data, and selecting diagnostic data traffic for transmission when no user traffic data is stored for transmission.

2. A method according to claim 1, in which the network is a Universal Mobile Telecommunications System (UMTS) network, the controller is a radio network controller (RNC), and the interface is an IuB interface.

3. A method according to claim 1 or claim 2, in which the diagnostic data is provided to a local maintenance terminal connected to the controller for inspection.

4. A method according to any preceding claim, in which there are a plurality of data communication channels between the base station and the controller over the interface, one channel being a diagnostic data channel, and another channel being a user data channel, the base station includes a plurality of data buffers such that data of each channel for transmission is stored before transmission in a respective buffer, the buffers each including an occupancy indicator so that user data is selected for transmission in preference to data from the buffer for diagnostic data.

5. A method according to claim 4, in which the controller includes a plurality of further data buffers, such that control data of each channel for transmission to the base station is stored before transmission in a respective buffer, the further buffers each including an occupancy indicator so that user channel control data is selected for transmission in preference to diagnostic channel control data.

6. A method according to claim 4 or claim 5, in which the diagnostic data channel is set up in response to a request from the controller to the base station, and control data which is a request for diagnostic data is sent by the controller to the base station, diagnostic data being sent in response.

7. A method according to claim 6, in which updated diagnostic data is sent periodically until control data which is a command to stop sending diagnostic data is received by the base station.

8. A network for mobile telecommunications comprising a base station connected via an interface with a base station controller operative to control the base station, the base station comprising storing means operative to store user data and diagnostic data for transmission, selecting means operative to select user data for transmission in preference to diagnostic data and to select diagnostic data traffic for transmission when no user traffic data is stored for transmission.

9. A network according to claim 8, in which the network is a Universal Mobile Telecommunications System (UMTS) network, the controller is a radio network controller (RNC), and the interface is an IuB interface.

10. A network according to claim 8 or claim 9, in which in use there are a plurality of data communication channels between the base station and the controller over the interface, one channel being a diagnostic data channel, and another channel being a user data channel, the base station includes a plurality of data buffers such that data of each channel for transmission is stored before transmission in a respective buffer, the buffers each including an occupancy indicator so that user data is selected for transmission in preference to data from the buffer for diagnostic data.
